# EUROPÄISCHE PATENTSCHRIFT

(11) **EP 0 858 941 B1**
(45) Veröffentlichungstag und Bekanntmachung des Hinweises auf die Patenterteilung: **10.04.2002**
(21) Anmeldenummer: 98101024.2
(22) Anmeldetag: 22.01.1998
(51) Int. Cl.: B62D 1/18

(54) **Antrieb für eine Lenksäule**
Drive for a steering column
Entraînement pour une colonne de direction

(30) Priorität: 12.02.1997 DE 19705203
(43) Veröffentlichungstag der Anmeldung: 19.08.1998
(73) Patentinhaber: VALEO Sicherheitssysteme, 85253 Erdweg (DE)
(72) Erfinder: Thiele, Christoph Rudolf, 80686 München (DE); Rosien, Harald, 82194 Groebenzell (DE)
(74) Vertreter: COHAUSZ HANNIG DAWIDOWICZ & PARTNER

(56) Entgegenhaltungen:
- US-A- 5 178 411

## Beschreibung

Die Erfindung betrifft einen Antrieb zur elektromechanischen Verstellung einer Lenksäule von Kraftfahrzeugen in mindestens zwei Freiheitsgraden, wobei die Lenksäule über eine erste Abtriebsbwelle in axialer Richtung verschiebbar und über eine zweite Abtriebsbwelle in einer vertikalen Ebene verschwenkbar ist und wobei beide Abtriebsbwellen über ein Überlagerungsgetriebe an die Antriebswelle eines einzigen Elektromotors gekoppelt sind.
Um den Fahrkomfort und die Sicherheit bei der Handhabung eines Kraftfahrzeuges zu erhöhen ist es bekannt, die Lenksäule beweglich anzuordnen, so daß das Lenkrad auf eine dem Fahrer angenehme Position ausgerichtet werden kann. Dabei kann der Fahrer die Entfernung des Lenkrades von seinem Körper durch axiales Verschieben der Lenksäule verändern. Zudem kann er die vertikale Neigung einstellen. Es ist außerdem bekannt, die Bewegungen in den beiden genannten Freiheitsgraden durch elektrische Antriebe zu bewerkstelligen um den Bedienkomfort zu vergrößern.
Nachteil der bekannten Antriebe ist, daß für jede Bewegungsrichtung ein separater Elektromotor mit einem daran anschließenden Getriebe notwendig ist. Da für die Verstellung über das Getriebe ein großer Kraftaufwand nötig ist, müssen die Elektromotoren stark und damit relativ groß konzipiert werden. Ein solcher Antrieb ist daher konstruktiv aufwendig und benötigt für seine Unterbringung einen großen Bauraum. Wegen der schweren Elektromotoren ist das Gewicht des Antriebes groß, was der allgemeinen Tendenz hin zu leichteren Fahrzeugen widerspricht. Zudem wirkt sich die Verwendung zweier Elektromotoren negativ auf die Produktionskosten des Fahrzeuges aus. Aus dem US 5,178,411 ist eine gettungsgemäße Vorrichtung bekannt, mit der sich der Antrieb einer Lenksäule in zwei Freiheitsgraden mit nur einem Antriebsmotor realisieren läßt. Nachteilig bei dieser Vorrichtung ist jedoch, daß die axiale Verschiebung nur bei gleichzeitiger Verschwenkung stattfinden kann. Eine solche Art der "gekoppelten" Verstellung bietet dem Fahrer keinen sonderlich hohen Fahrkomfort.
Aufgabe der vorliegenden Erfindung ist es daher, einen alternativen kompakten, zuverlässigen Antrieb für die Lenksäulenverstellung von Kraftfahrzeugen zu schaffen, der sich durch geringes Gewicht und eine kostengünstige Herstellung auszeichnet und mit dem die Verstellung in zwei Freiheitsgraden unabhängig voneinander steuerbar ist.
Diese Aufgabe wird durch einen Antrieb nach dem Anspruch 1 gelöst.
Bei dem erfindungsgemäßen Antrieb ist es besonders vorteilhaft, daß zwei Abtriebsbwellen mittels eines Überlagerungsgetriebes in Form eines Umlaufgetriebes, insbesondere eines Planetengetriebes an die Antriebswelle eines einzigen Elektromotors gekoppelt sind. Dadurch kann ein Elektromotor eingespart werden. Diese Einsparung wirkt sich positiv auf die Herstellungskosten des Antriebes aus. Gleichzeitig geht mit dem erfindungsgemäßen Antrieb eine deutliche Reduzierung des Gewichtes einher, so daß mit einer Verringerung der Betriebskosten für das Kraftfahrzeug gerechnet werden kann. Umlaufgetriebe zeichnen sich außerdem durch besondere Laufruhe aus, was zu einer-Erhöhung des Komforts beiträgt.
Vorteilhaft ist weiterhin, daß der erfindungsgemäße Antrieb von verhältnismäßig einfacher und kompakter Konstruktion ist. Dadurch kann der Bauraum minimiert werden, so daß der Antrieb auch in kleinere Fahrzeuge z.B. in Klein- und Mittelklassewagen eingebaut werden kann. Gleichzeitig ist durch die einfache Konstruktion eine besonders hohe Zuverlässigkeit gewährleistet, da mit der Reduzierung der Bauteile eine Verminderung der Störanfälligkeit der Vorrichtung einhergeht. Die größere Zuverlässigkeit wird durch das Fehlen eines Motors begünstigt. Bei der einfachen Konstruktion ist der erfindungsgemäße Antrieb besonders einfach zu fertigen und bei der Montage und Demontage leicht zu handhaben.
In einer vorteilhaften Bauform ist das Umlaufgetriebe so ausgelegt, daß die Stufen unabhängig voneinander festsetzbar sind. So kann der Antrieb einfach und komfortabel zur Einstellung des Lenkrades benutzt werden. Die Position des Lenkrades kann dem Bedarf des Fahrers exakt angepaßt werden. Es ist besonders vorteilhaft, wenn das Umlaufgetriebe ein Planetengetriebe ist, dessen Planetenräder starre Achsen aufweisen, die in einem gemeinsamen Planetenträger drehbar gelagert sind. Es ist zudem vorteilhaft, wenn der Planetenträger eine parallel zum Außenrad angeordnete Scheibe mit dem Durchmesser des Außenrades ist. Bei einer derartigen Konstruktion können die beiden Getriebestufen, die einerseits vom Außen- oder Hohlrad und andererseits vom Planetenträger mit gleichem Durchmesser gebildet werden, durch zwei parallel angeordnete Sperrbolzen, die in den Umfang der beiden Räder eingreifen, festgesetzt werden. Die Steuerung der Sperrbolzen geschieht in einer besonders einfachen und robusten Ausführungsform über einen mehrstufigen Magnetschalter, der einen Steuerschieber bewegt.
In einer besonderen Ausführungsform wird der Antrieb über zwei unabhängige Schalter angesteuert, wobei der eine Schalter die axiale Bewegung (Tele-Funktion) und der andere Schalter die Schwenkbewegung aktiviert. Die Position kann dabei mittels eines Memoryschalters gespeichert werden. Zwei Sensoren, die vorteilhafterweise am Gehäuse des Getriebes über dem Planetenträger bzw. über dem Außenrad angeordnet sind, zählen die Umdrehung des jeweiligen Rades.
Bei einer bevorzugten Ausführungsform läßt sich mittels einer Memory-Taste eine individuell voreingestellte und in einem elektronischen Speicherelement niedergelegte Position abrufen. In einer anderen Ausführungsform ist zudem eine Elektronik vorgesehen, die bewirkt, daß nach Schlüsselabzug aus dem Lenkschloß sich die Lenksäule automatisch zurückzieht bzw. bis zur Endlage fährt und erst beim Einstecken des Schlüssels auf die jeweils gespeicherte Position fährt. Dabei kann jedem ausgegebenen Schlüssel eine andere Position zugeordnet sein, so daß jede das Fahrzeug benutzende Person ihre individuelle Lenkradstellung gespeichert hat.

Der erfindungsgemäße Antrieb ist in den Zeichnungen dargestellt und wird im folgenden näher beschrieben.

Es zeigen:
- **Figur 1**: eine Lenksäule mit Antrieb und
- **Figur 2**: das Planetengetriebe des Antriebs.

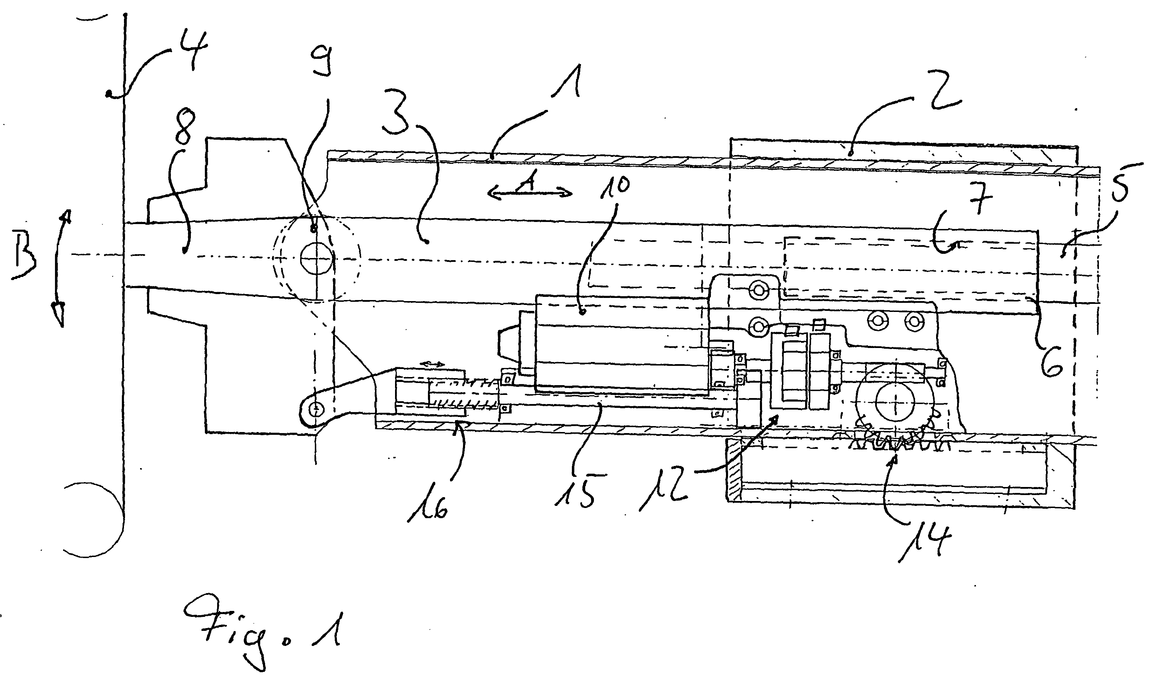

Figur 1 zeigt eine am Fahrzeug befestigte Verkleidung 2 einer drehbaren Lenksäule 1. Über eine in axialer Richtung verschiebbare Welle 3 wird die Drehbewegung des Lenkrades 4 auf die Lenkwelle 5 übertragen. Die Lenkwelle 5 weist an ihrem Nocken eine Außenverzahnung 6 auf, die in eine Innenverzahnung 7 der verschiebbaren Welle 3 eingreift, so daß beide Wellen 3 und 5 in Drehrichtung formschlüssig und in axialer Richtung (Pfeil A) gegeneinander verschieblich sind. Das Lenkrad 4 ist mit seiner Achse 8 über ein Kugelgelenk 9 mit der verschiebbaren Welle 3 verbunden.

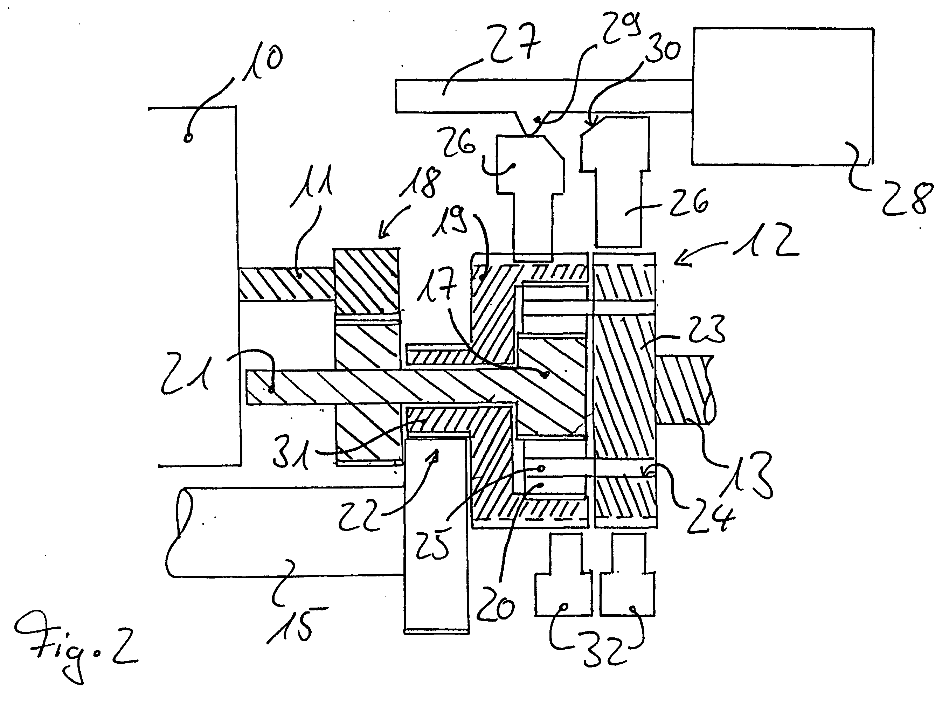

Durch das Kugelgelenk 9 wird eine Schwenkbewegung (Pfeil B) des Lenkrades 4 ermöglicht.
Die axiale Verschiebung A und die Schwenkbewegung B werden elektromechanischen mittels eines Antriebes (Detailzeichnung Figur 2) bewerkstelligt. Die Verstellung in den beiden Freiheitsgraden erfolgt über einen Elektromotor 10, dessen Antriebswelle 11 ein zweistufiges Überlagerungsgetriebe 12 antreibt. Dabei bewirkt die erste Abtriebsbwelle 13 des Getriebes 12 die Verschiebung in axialer Richtung A über ein Schneckengetriebe 14 und die zweite Abtriebsbwelle 15 die Schwenkbewegung in einer vertikalen Ebene vermittels eines Spindelantriebes 16.
Das Überlagerungsgetriebe 12 ist in diesem Ausführungsbeispiel ein Planetengetriebe. Die Welle 21 eines Zentralrades 17 (Sonnenrad) des Planetengetriebes 12 wird von der Antriebswelle 11 des Motors 10 über ein Zahngetriebe 18 angetrieben. Zwischen der Außenverzahnung des Zentralrades 17 und der Innenverzahnung eines Außenrades 19 laufen mehrere, in diesem Falle vier, Planetenräder 20. Über das Außenrad 19 wird die erste der beiden Stufen des Getriebes 12 übertragen. Dabei treibt das Außenrad 19 die zweite Abtriebsbwelle 15 über ein Zahngetriebe 22 an. Das Außenrad 19 weist dazu einen Schaft 31 auf, der die Antriebswelle des Zentralrades 17 wie eine Hülse umgreift. Auf den Schaft 31 befindet sich eine Außenverzahnung, in die ein auf der Abtriebswelle 15 angebrachtes Zahnrad eingreift. Durch die Drehung des Außenrades 19 ist der Schwenkwinkel des Lenkrades einstellbar.
Die zweite Stufe des Getriebes wird über einen Planetenträger 23 übertragen. Der Planetenträger 23 ist ein Zahnrad, das koaxial zur Welle 21 und parallel zum Außenrad 19 angeordnet ist und das denselben Außendurchmesser wie das Außenrad 19 hat. In die Scheibenfläche des Planetenträgers 23 sind vier achsparallele Bohrungen 24 eingebracht, die als Lager für die Achsen 25 der Planetenräder 20 dienen. Über die sich in den Lagern 24 drehenden Achsen 25 wird die kreisende Bewegung der Planetenräder 20 in eine Rotationsbewegung des Planetenträgers 23 umgesetzt. Durch die Drehung des Planetenträgers 23 als zweite Stufe des Getriebes ist der axiale Hub der Lenksäule einstellbar.
Die beiden Stufen des Getriebes 12 sind unabhängig voneinander festsetzbar. Dazu werden Sperrbolzen 26 in radialer Richtung in die Außenverzahnungen des Planetenträgers 23 bzw. des Außenrades 19 eingebracht. Während einer der Sperrbolzen 26 die Rotation eines der Räder blockiert, dreht das andere Rad weiter. Das Einbringen der Sperrbolzen 26 geschieht über einen Steuerschieber 27, der in axialer Richtung von einem Magnetschalter 28 bewegt wird. Die axiale Bewegung des Steuerschiebers 27 wird über einen radial angeordneten Zapfen 29, der auf einer am Kopf der Sperrbolzen 26 befindlichen Steuerkurve 30 gleitet, in die radiale Bewegung der Sperrbolzen 26 umgesetzt. Die Steuerkurve ist in diesem Falle eine Schräge 30.
Die Winkelstellung von Außenrad 19 und Planetenträger 23 ist durch Sensoren 32 ermittelbar, deren aktive Fläche dem Umfang der Räder 19 und 23 zugewandt ist. Die registrierte Stellung kann in einem elektronischen Speicherbaustein (nicht dargestellt) gespeichert werden. Außerdem kann eine gespeicherte Einstellung durch den Antrieb reproduziert werden.

## Patentansprüche

1. Antrieb zur elektromechanischen Verstellung einer Lenksäule (1) in mindestens zwei Freiheitsgraden, wobei die Lenksäule (1) über eine erste Abtriebswelle (13) in axialer Richtung verschiebbar und über eine zweite Abtriebswelle (15) in einer vertikalen Ebene verschwenkbar ist und wobei beide Abtriebswellen (13,15) über ein Überlagerungsgetriebe (12) an die Antriebswelle (11) eines einzigen Elektromotors (10) gekoppelt sind,
**dadurch gekennzeichnet, daß** das Überlagerungsgetriebe (12) ein Umlaufgetriebe mit zwei unabhängig voneinander festsetzbaren Stufen ist.

2. Antrieb nach Anspruch 1,
**dadurch gekennzeichnet, daß** das Überlagerungsgetriebe (12) ein Planetengetriebe ist.

3. Antrieb nach Anspruch 2,
**dadurch gekennzeichnet, daß** die Planetenräder (20) des Planetengetriebes zwischen einem Zentralrad (17) und einem Außenrad (19) mit Innenverzahnung laufen.

4. Antrieb nach Anspruch 3,
**dadurch gekennzeichnet, daß** das Zentralrad (17) über eine Welle (21) vom Elektromotor (10) antreibbar ist.

5. Antrieb nach einem der Ansprüche 2 bis 4,
**dadurch gekennzeichnet, daß** das Planetengetriebe (12) Planetenräder (20) aufweist, deren Achsen (25) in einem gemeinsamen Planetenträger (23) drehbar gelagert sind.

6. Antrieb nach einem der Ansprüche 2 bis 5,
**dadurch gekennzeichnet, daß** der Planetenträger (23) eine parallel zum Außenrad (19) angeordnete Scheibe mit dem Durchmesser des Außenrades (19) ist.

7. Antrieb nach einem der Ansprüche 2 bis 6,
**dadurch gekennzeichnet, daß** das Außenrad (19)und der Planetenträger (23) mit radial in den Umfang eingreifenden oder mit an den Umfang angreifenden Sperrbolzen (26) unabhängig voneinander festsetzbar sind.

8. Antrieb nach Anspruch 7,
**dadurch gekennzeichnet, daß** die Sperrbolzen (26) über einen durch einen Magnetschalter (28) bewegten Steuerschieber (27) alternativ in die eingreifende Stellung bewegbar sind.

9. Antrieb nach einem der Ansprüche 2 bis 8
**dadurch gekennzeichnet, daß** das Außenrad (19) einen Schaft (31) aufweist, der die Antriebswelle (21) des Zentralrades (17) umfaßt.

10. Antrieb nach Anspruch 9,
**dadurch gekennzeichnet, daß** durch die Drehung des Außenrades (19) der Schwenkwinkel des Lenkrades (4) einstellbar ist.

11. Antrieb nach einem der Ansprüche 2 bis 10,
**dadurch gekennzeichnet, daß** durch die Drehung des Planetenträgers (23) der axiale Hub der Lenksäule (1) einstellbar ist.

12. Antrieb nach einem der Ansprüche 2 bis 11,
**dadurch gekennzeichnet, daß** die Stellung von Außenrad (19) und Planetenträger (23) durch Sensoren (32) ermittelbar und durch eine Elektronik speicherbar ist.

## Claims

1. Drive for the electro-mechanical adjustment of a steering column (1) in at least two degrees of freedom, in which the steering column (1) can be moved in the axial direction via a first driven shaft (13) and can be swung in a vertical plane via a second driven shaft (15) and in which both driven shafts (13, 15) are coupled via a superimposed drive (12) to the drive shaft (11) of a single electric motor (10), **characterised in that** the superimposed drive (12) is a planetary gear train with two stages which can be fixed independently of one another.

2. Drive according to Claim 1, **characterised in that** the superimposed drive (12) is a planetary gear.

3. Drive according to Claim 2, **characterised in that** the planet wheels (20) of the planetary gear turn between a central wheel (17) and an outer wheel (19) with internal toothing.

4. Drive according to Claim 3, **characterised in that** the central wheel (17) can be driven by the electric motor (10) via a shaft (21).

5. Drive according to one of Claims 2 to 4, **characterised in that** the planetary gear (12) has planet wheels (20) the spindles (25) of which are mounted so as to rotate in a common pinion cage (23).

6. Drive according to one of Claims 2 to 5, **characterised in that** the pinion cage (23) is a disc, arranged parallel to the outer wheel (19), having the diameter of the outer wheel (19).

7. Drive according to one of Claims 2 to 6, **characterised in that** the outer wheel (19) and the pinion cage (23) can be fixed independently of one another with locking pins (26) which engage radially in the periphery or with locking pins (26) which catch on the periphery.

8. Drive according to Claim 7, **characterised in that** the locking pins (26) can alternatively be moved into the engaging position via a control slider (27) which is moved by a solenoid switch (28).

9. Drive according to one of Claims 2 to 8, **characterised in that** the outer wheel (19) has a shaft (31) which surrounds the drive shaft (21) of the central wheel (17).

10. Drive according to Claim 9, **characterised in that** the pivoting angle of the steering wheel (4) is adjustable by the rotation of the outer wheel (19).

11. Drive according to one of Claims 2 to 10, **characterised in that** the axial displacement of the steering column (1) is adjustable by the rotation of the pinion cage (23).

12. Drive according to one of Claims 2 to 11, **characterised in that** the position of outer wheel (19) and pinion cage (23) can be determined by sensors (32) and stored using electronics.

## Revendications

1. Dispositif d'entraînement pour le réglage électromagnétique d'une colonne de direction (1) suivant au moins deux degrés de liberté, la colonne de direction (1) étant déplaçable par le biais d'un premier arbre de sortie (13) dans la direction axiale et pouvant pivoter, par le biais d'un deuxième arbre de sortie (15), dans un plan vertical, et les deux arbres de sortie (13, 15) étant accouplés par l'intermédiaire d'un engrenage à superposition (12) sur l'arbre d'entraînement (11) d'un moteur électrique (10) unique, **caractérisé en ce que** l'engrenage à superposition (12) est un engrenage épicycloidal avec deux étages pouvant être fixés indépendamment l'un de l'autre.

2. Dispositif d'entraînement selon la revendication 1, **caractérisé en ce que** l'engrenage à superposition (12) est un engrenage planétaire.

3. Dispositif d'entraînement selon la revendication 2, **caractérisé en ce que** les roues planétaires (20) de l'engrenage planétaire tournent entre une roue centrale (17) et une roue extérieure (19) avec une denture intérieure.

4. Dispositif d'entraînement selon la revendication 3, **caractérisé en ce que** la roue centrale (17) peut être entraînée par le biais d'un arbre (21) par le moteur électrique (10).

5. Dispositif d'entraînement selon l'une quelconque des revendications 2 à 4, **caractérisé en ce que** l'engrenage planétaire (12) présente des roues planétaires (20) dont les axes (25) sont montés rotatifs dans un support planétaire commun (23).

6. Dispositif d'entraînement selon l'une quelconque des revendications 2 à 5, **caractérisé en ce que** le support planétaire (23) est un disque disposé parallèlement à la roue extérieure (19) de même diamètre que la roue extérieure (19).

7. Dispositif d'entraînement selon l'une quelconque des revendications 2 à 6, **caractérisé en ce que** la roue extérieure (19) et le support planétaire (23) peuvent être fixés indépendamment l'un de l'autre avec des boulons de blocage (26) s'engageant radialement dans la périphérie ou s'engageant avec la périphérie.

8. Dispositif d'entraînement selon la revendication 7, **caractérisé en ce que** les boulons de blocage (26) peuvent être déplacés alternativement dans la position d'engagement par le biais d'un tiroir de distribution (27) déplacé par un commutateur magnétique (28).

9. Dispositif d'entraînement selon l'une quelconque des revendications 2 à 8, **caractérisé en ce que** la roue extérieure (19) présente un arbre (31) qui entoure l'arbre d'entraînement (21) de la roue centrale (17).

10. Dispositif d'entraînement selon la revendication 9, **caractérisé en ce que** l'angle de pivotement du volant (4) est ajustable par la rotation de la roue extérieure (19).

11. Dispositif d'entraînement selon l'une quelconque des revendications 2 à 10, **caractérisé en ce que** la course axiale de la colonne de direction (1) est ajustable par la rotation du support planétaire (23).

12. Dispositif d'entraînement selon l'une quelconque des revendications 2 à 11, **caractérisé en ce que** la position de la roue extérieure (19) et du support planétaire (23) peut être détectée par des capteur (32) et mémorisée par une unité électronique.
